# EUROPEAN PATENT APPLICATION

(11) **EP 0 751 038 A2**
(43) Date of publication of application: **02.01.1997**
(21) Application number: 96500089.6
(22) Date of filing: 28.06.1996
(51) Int. Cl.: B60N 3/06

(54) **Footrest for vehicle seats**

(30) Priority: 30.06.1995 ES 9501316
(71) Applicant: INDUSTRIAS ESTEBAN, S.A., E-31012 Pamplona (Navarra) (ES)
(72) Inventor: Irmler, Helmut, 31012 Pamplona, Navarra (ES)
(74) Representative: Carpintero Lopez, Francisco

(57) **Abstract**

The footrest is designed to be located under a vehicle seat, at the rear area of such seat, being able to take up top or inactive and bottom or active limiting positions. It comprises a pivoting arm (5) mounted on a support (1) fixed to the bottom structure of the seat, the arm (5) being rotatably fitted at its free end with a transversely elongate part (16) constituting the surface for resting the feet, which may rotate about an axis (15) between two limiting positions, defined by two edges (17) and (18) acting as abutments, provided both on the front portion and the lower rear portion of this part (16), such edges (17) and (18) respectively abutting against the top and bottom edges of the actual arm (5), being complemented with a cogged sector (7) and a pawl (19) for the arm (5) to be interlocked in the various positions.

## Description

### OBJECT OF THE INVENTION

The invention relates to a footrest for vehicle seats devised to be mounted under the seat proper, at its rear end, thereby for the footrest to be almost concealed in the inactive position and when in use to enable a traveller sitting in the seat right behind to place his feet on the footrest proper without any difficulty whatsoever and at his convenience, since the mechanism forming part of the footrest structure allows the same to take up several stable positions.

### BACKGROUND OF THE INVENTION

Many types of footrests are currently marketed, their shapes and structures being very different, but all of which have an arm that is rotatably mounted at one of its ends to a support fixed under the seat proper, which arm extends at its free end, that tends to surface behind the said seat to which the unit is fixed, into a part that stands as the support upon which feet are rested, which part is rotatably mounted to the end of said arm.

Many solutions exist to reach extreme, i.e. inactive and active, positions of the footrest, and to keep the footrest stable in such positions. Solutions also exist to allow the footrest proper to take up intermediate positions between the extreme positions aforesaid.

In any event, and as explained above, there are many existing solutions, sometimes complex and at other times more simple, but they can generally be said to represent but different nuances allowing a compatible marketing by the various manufacturers.

Reference can in this sense be made, for instance, to a footrest claimed in European patent no. 0 543 050, which relates to a passenger seat, claiming the provision of a footrest under the seat proper, which comprises a lever that is rotatable at one end, the other end being likewise rotatably fitted, as is conventional, with a part that will constitute the support for the feet.

The footrest described in said European patent can take up several intermediate positions between the top inactive and bottom active limiting positions, and therefore, although no description is given, it appears to have a system securing it in each such position, based upon a ball housed in a complementary casing.

Reference can similarly be made to European patent no. 0 236 847, which also describes a footrest having its lever or arm carrying the support for the feet, rotatably mounted on a box-like part having a number of notches which, together with a ratchet fastener, also allow the lever and hence the support for the feet to take up different positions. This mechanism appears to be more complex or perchance less reliable than that disclosed in European patent 0 543 050, for the ratchet fastener in this second patent has to be connected to a hoop iron that takes up a very specific position, which requires great precision in mounting and arranging elements in order for operation to be correct.

Reference could also be made to German patent 2,731,209, which relates to an adjustable footrest, where adjustment to achieve the various footrest positions is based upon a ratchet-lever mechanism.

In any case, and in a manner that could be described as widespread, footrests rely, as aforesaid, on a lever or arm that is linked at one end to a support fixed under the seat, and is rotatably fitted at the other end with the actual support for the feet.

What is clearly important is the manner in which the lever or arm carrying the footrest pivots, and limiting the rotation of the latter in order that each time the user rests his feet, he may do so as comfortably as possible.

### DESCRIPTION OF THE INVENTION

The footrest subject hereof has been precisely devised bearing in mind the prior art cited in the previous section, with a view to obtaining a footrest which may be easily adjustable insofar as folding is concerned, and establishing a number of abutments constituting the limits of rotation of the footrest.

Furthermore, an essential feature of the present application is the fact that the footrest proper can be made in the multi-positional version, which means to say that it can take up various intermediate positions between the top inactive and the bottom active positions, and another version in which the footrest can take up only the two limiting positions aforesaid, which may be achieved without howsoever changing the parts, by merely eliminating one of them, in the two-positional version, i.e. the version in which only the extreme inactive and active positions can be taken up.

The double version or embodiment of the footrest with the same parts results in a decrease of stocks, number of parts, etc.

More specifically, the footrest of the invention comprises, as is conventional, a lever arm articulated at one end to a support fixed under the vehicle seat whereas the other end is rotatably fitted, after an obtuse angled elbow, with the part constituting the support for the feet, being particular in that the latter is hollow and has a front and a rear edge or abutment between its walls, which constitute the limits of rotation of said part for resting the feet, on the one hand when it abuts against the front area of the mounting arm, at an area close to the elbow, and on the other when it abuts against the rear edge or rim of the same mounting arm.

Another novel feature of the footrest lies in that the turning end of the arm carrying the part for resting the foot is particularly shaped, defining a cam with a cogged sector which may be complemented by a cog on a pawl articulated to the actual support fixing the unit to the seat structure, said pawl being able to take up a fixed interlocked position, allowing the arm carrying the footrest to pivot from the top inactive position to the bottom active position, or else such pawl may be released in order for said arm carrying the part supporting the feet to be interlocked, as it is pivoted manually upwards, in each of the cogs defined in the cam-shaped sector of such pivoting arm, for the pawl is biased by a spring towards a position in which its cog tends to mesh with the cogs of the cogged sector of said pivoting arm, a spring or coil being moreover secured between such pivoting arm and the actual support fixing the unit to the bottom structure of the seat.

In accordance with the above, the pivoting arm can take up the extreme top and bottom positions and moreover intermediate positions, their number being as many as there are interlocked positions of the pawl cog and the cogged sector of the actual pivoting arm.

Now then, the pivoting arm can take up only the two extreme positions, i.e. the top or inactive and bottom or active position, simply by eliminating the pawl, without having to howsoever rearrange or change any of the parts, but merely, as aforesaid, without mounting the pawl. The arm carrying the part for resting the feet is clearly provided with abutments to limit its travel, one of which comprises an elastic abutment provided on the relevant unit mounting support, and another comprising a pin or cross-member also fitted on the bottom portion of such unit mounting support.

Consequently, the footrest made in accordance with the invention, is altogether capable of being mounted to be multi-positional, i.e. take up different positions between the inactive or top and active or bottom limiting positions, or two-positional, i.e. capable of taking up only the two extreme positions referred to hereinbefore, in which latter case it is sufficient not to mount the pawl as explained before.

It is moreover noteworthy that the elbow on the pivoting arm defining the free end sector on which the part supporting the feet is mounted, allows such pivoting arm carrying said part to be almost fully concealed under the seat, such parts further having no sharp edges.

Furthermore, the support for attachment to the bottom structure of the seat is preferably made of metal plate as opposed to cast aluminium parts that are normally used in conventional systems.

It is also noteworthy that the surface of the part supporting the feet, on which said feet will actually rest, is entirely covered with a plurality of evenly distributed protuberances, in the form of spherical caps, providing such supporting surface with a non-slip surface and moreover a feeling of padding and comfort for the feet.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

Figure 1.- Is a representation of a side elevation view of the footrest of the invention, in the top or inactive limiting position.

Figure 2.- Is a representation of a similar side elevation of the footrest in the bottom or active limiting position, this figure representing the two limiting positions that can be taken up by the part for resting the feet lying at the free end of the pivoting arm of the unit.

Figure 3.- Is a representation equivalent to that of the preceding figures, in this case in an intermediate active position.

Figure 4.- Is a plan view of the pivoting arm, which can be seen to be provided at its front end, i.e. at its articulation, with two cogged sectors.

Figure 5.- Is a plan view of the part constituting the support for the unit to be fixed to the bottom portion of the seat.

Figure 6.- Is a close view of the top surface of the part for resting the feet mounted on the free end of the pivoting arm of the unit.

Figure 7.- Is finally a plan view of the pawl fitted with the relevant cog complementing the cogs provided on the cogged sector of the pivoting arm in order to secure the various positions of the footrest.

### PREFERRED EMBODIMENT OF THE INVENTION

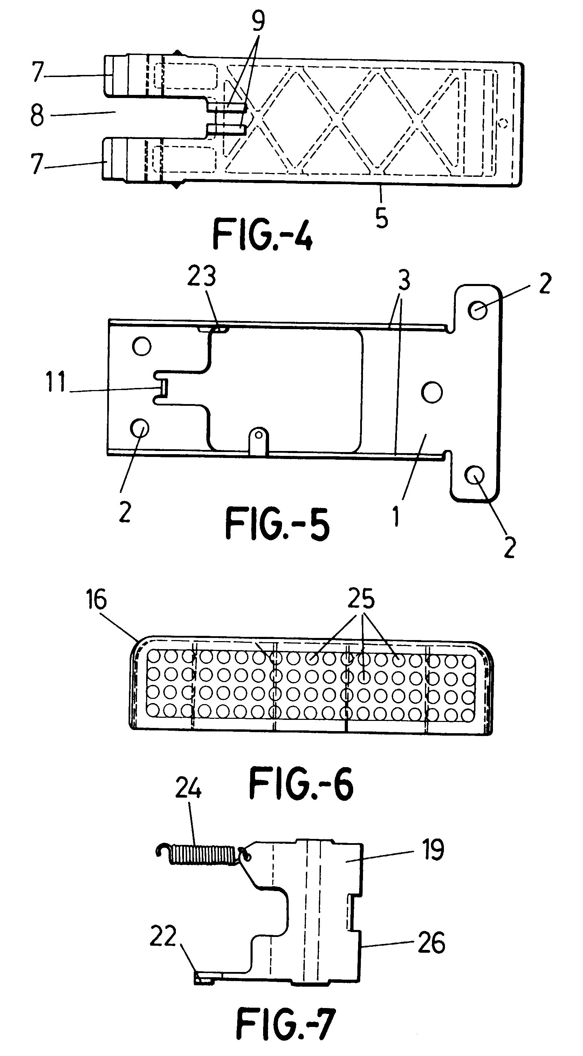

With reference to the figures, the footrest of the invention comprises a support (1) designed to be fixed to the bottom rear portion of a vehicle seat, to which end said support (1) is provided with holes (2) with which to be secured or fixed under the vehicle seat, and is in turn provided with a pair of side wings (3) between which an axis (4) is located for the relevant pivoting arm (5) to be mounted, the front portion of the arm being cam-shaped (6) with a cogged sector (7) which, as shown in figure 4, comprises two portions separated by an intermediate area (8). In any event, the said pivoting arm (5) has a salient comprising two lugs (9) in which the end of a spring (10) is fixed, its other end being secured to a flange (11) provided on the actual unit fixing support (1).

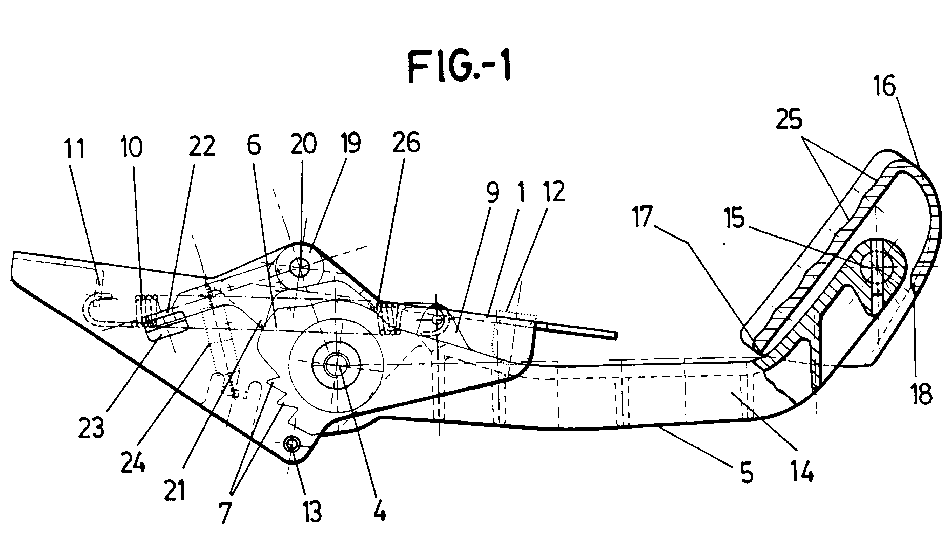

This support (1) is moreover provided with an elastic abutment (12) for the pivoting arm (5) when the latter is in its top or inactive position, shown in figure 1, and in turn the bottom portion of the support (1) has an abutment (13) for the actual arm (5) in the bottom limiting position.

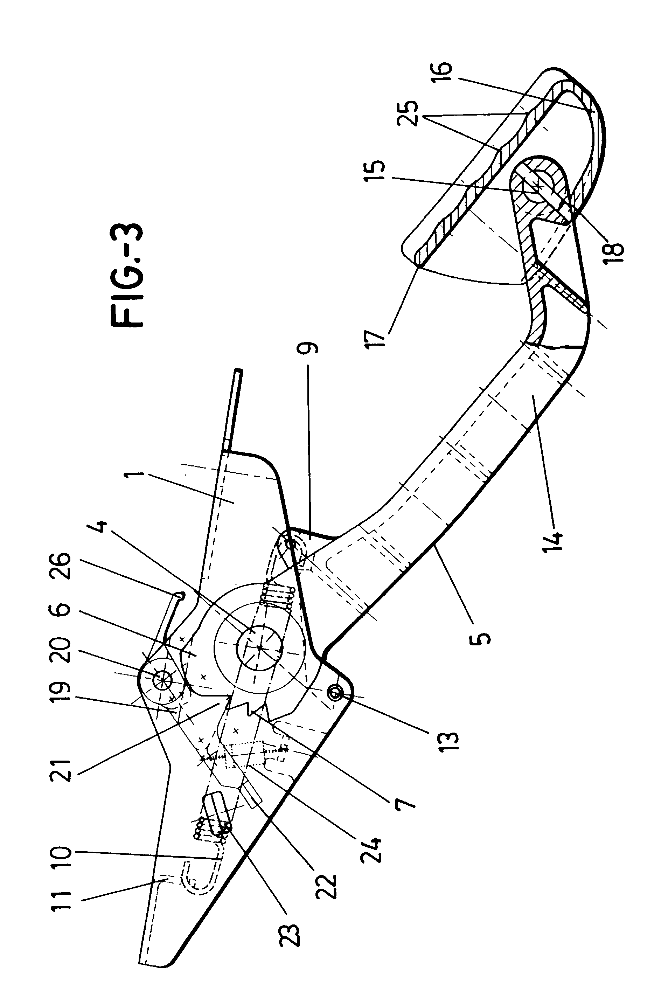

The said arm (5) is provided, close to the end opposite its articulated or rotatable end, with an obtuse angled elbow (14), after which a sector is defined at the end of which a part (16) is fitted, through a pin or axis (15), which is elongated crosswise and constitutes the actual support for the feet, this part being mounted to turn about such axis (15) and its rotation being limited at two extreme positions, for such part (16) is hollow and has an edge (17) on its front portion serving as a forward turning and pivoting abutment of the part (16), as shown in figure 1, when the front edge (17) of the part (16) abuts on the front edge of the elbow (14) area of the pivoting arm (5), whereas the front portion is provided with an edge (18) constituting an abutment to limit rotation in the opposite direction of said part (16) for resting the feet, as shown in figure 3, for such edge (18) will abut against the bottom edge of the end sector of the arm (5).

A pawl (19) is mounted on the top portion between the two wings (3) of the support (1), which mounting takes place by means of a turning axis (20) such that it may pivot, which pawl (19) is provided with a cog (21) and a lateral extension (22) that may be interlocked in a projection (23) of one of the sides of such support (1), the pawl (19) thereby complementing the cogged sectors (7) of the pivoting arm (5), because its cog (21) is likewise defined by two sectors that will correspond with the cogged sectors (7) of the actual pivoting arm (5).

This pawl (19) is moreover connected to an elastic drive element or device (24) which tends to have the pawl (19) pivot against the cam (6) of the pivoting arm (5), and hence against the cogged sectors (7) of the latter, and is connected to another opposite end (26) which causes the pawl or catch (19) to pivot in the opposite direction against the same cam (6).

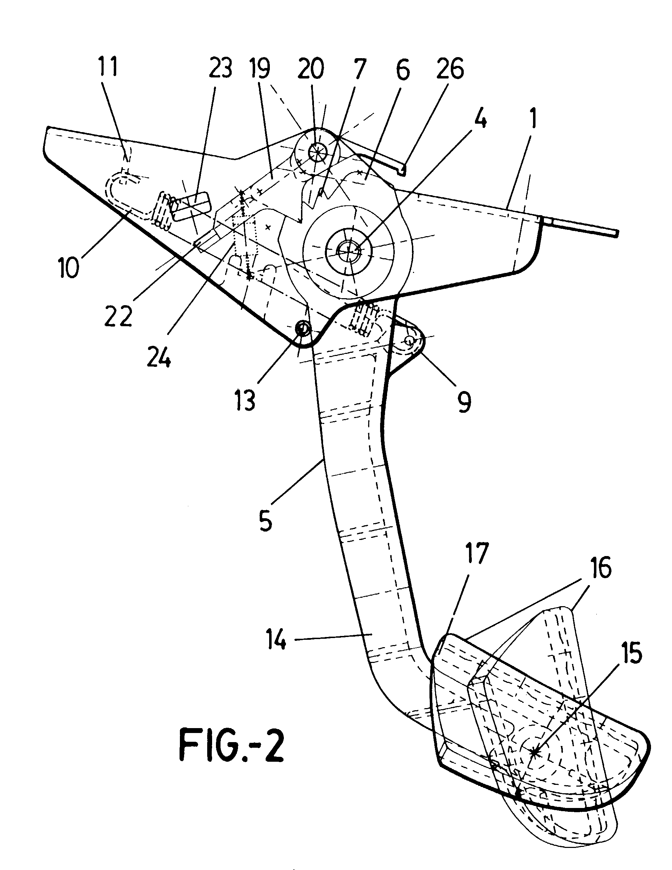

Now then, starting from the inactive position of the footrest shown in figure 1, in which case the same will be concealed under the seat to which it is fixed, and with the pawl (19) interlocked in the projection (23) of the support (1), the arm (5) may be pivoted, without any hindrance, down to the bottom limiting position shown in figure 2, and therefore if the pawl (19) is released from the projection (23) thereupon, then the drive element (24) connected to such pawl (19) tends to have its cog (21) lean on the cam (6) and, therefore, when the same reaches a valley of the cogged sector (7), it shall be interlocked therein causing the pivoting arm (5) to be secured in such position, which positions will gradually be reached as the pivoting arm (5) is manually turned up from such bottom limiting position shown in figure 2, up to the inactive position of figure 1, taking up, as aforesaid, different intermediate positions, as shown, for instance, in figure 3, where the cog (21) of the pawl (19) is interlocked in one of the valleys of the cogged sector (7) of the cam (6) of the pivoting arm (5).

As explained before, the part (16) constituting the support for the feet can take up the two limiting positions as it turns about the axis (15), when the front (17) and bottom rear (18) edges of such part (6) abut in either case against the top or bottom edges of the actual end sector of the pivoting arm (5).

It should lastly be noted that the upper surface of this part (16) for resting the feet is provided with a number of protuberances (25), in the form of spherical caps, evenly and regularly distributed on the upper surface, taking up the entire surface, defining a non-slip means for the feet proper, and means for padding and making the same comfortable.

## Claims

1. A footrest for vehicle seats, comprising a pivoting arm rotatably mounted at one end to a support fixing the unit to the bottom structure of the seat, below the same, and at the rear of such seat, whereas the free end of said arm is rotatably fitted with a transversely elongate part constituting the means for resting the feet, such part rotating between two limiting positions in accordance with the active position of the unit, and the latter being capable of taking up two extreme positions, namely a top or inactive and a bottom or active position, and otherwise moreover taking up intermediate active positions between the said two positions, characterised in that the rotating end of the arm (5) is cam-shaped (6) with a cogged sector (7) that maybe complemented with a pawl (19) cog (21), thereby to allow such pivoting arm (5) to be interlocked in intermediate active positions between the top or inactive and bottom or active positions; the bottom of the support (1) securing or fixing the unit under the vehicle seat being provided to be fitted with an abutment (13) to limit the rotation of the pivoting arm (5) to the extreme bottom or active position, the top portion of such support (1) having an elastic abutment (12) for the top or inactive limiting position of the actual pivoting arm (5).

2. A footrest for vehicle seats, as in claim 1, characterised in that the part (16) constituting the support for the feet, which is hollow, has a front edge (17) constituting the abutment for its rotation as it contacts with the top edge of the arm (5), whereas the bottom end of such part (16) has another edge (18) constituting the abutment for rotation of such part (16) in the opposite direction, as it contacts with the bottom edge of the actual pivoting arm (5).

3. A footrest for vehicle seats, as in preceding claims, characterised in that the arm (5) is provided, close to its free end where the part (16) supporting the feet is mounted, with an obtuse angled elbow (14) which allows such arm (5) and the actual part supporting the feet (16) to lie mostly concealed under the seat in the top or inactive position of the unit.

4. A footrest for vehicle seats, as in preceding claims, characterised in that the top surface of the part (16) for supporting the feet is provided with a number of evenly distributed protuberances (25), in the form of spherical caps, taking up almost the entire surface, defining a non-slip means that provides padding and comfort for the user's feet.

5. A footrest for vehicle seats, as in preceding claims, characterised in that the pivoting arm (5) has lugs (7) and the support (1) a flange (11) for the relevant ends of a coil (10) to be secured.

6. A footrest for vehicle seats, as in preceding claims, characterised in that the pawl (19), provided with the cog (21) complementing the cogged sector (7) of the pivoting arm (5), to secure each of the positions of the latter, pivots alternatively between two stable engaged and restrained positions, the lever (22) of the pawl (19) having been designed to jump to the restrained position, reaching above the projection (23) of the support (1) upon the cam (6) of the pivoting arm (5) pushing the cog (21) close to the top position of the arm (5), allowing such pivoting arm (5), in this restrained position, to turn without any hindrance whatsoever from such inactive position to the bottom limiting position, and the lever (22) having also been designed to jump to the engaged position, reaching below the side projection (23) upon the cam (6) pushing the opposite end (26) of the pawl (19) close to the bottom position of the arm (5), allowing the pivoting arm (5), in such engaged position and because the pawl (19) is biased by the spring (24), to engage between three successive active heights of the footrest.

7. A footrest for vehicle seats, as in preceding claims, characterised in that simply by eliminating the pawl (19) and without changing the remaining constituent parts of the mechanism for pivoting said footrest, the arm (5) can pivot between two single stable positions, i.e. a top or inactive and a bottom or active position, such that pivoting of the arm (5) is limited at such bottom position by the axis (13) which serves as an abutment and which is arranged between the wings of the support (1).
